Europäisches Patentamt

European Patent Office

Office européen des brevets

(19)

(11) Numéro de publication : **0 038 760**
**B1**

(12) **FASCICULE DE BREVET EUROPÉEN**

(45) Date de publication du fascicule du brevet :
05.09.84

(21) Numéro de dépôt : 81400623.5

(22) Date de dépôt : 17.04.81

(51) Int. Cl.³ : **B 29 D 7/00**, B 05 D 1/26,
C 08 J 5/18

(54) Procédé et dispositif pour la fabrication de feuilles de matière plastique de haute qualité optique et produits obtenus.

(30) Priorité : 17.04.80 FR 8008627

(43) Date de publication de la demande :
28.10.81 Bulletin 81/43

(45) Mention de la délivrance du brevet :
05.09.84 Bulletin 84/36

(84) Etats contractants désignés :
BE DE FR GB IT

(56) Documents cités :
FR-A- 961 956
FR-A- 1 519 234
FR-A- 2 162 636
FR-A- 2 230 487
US-A- 1 862 541

(73) Titulaire : **SAINT-GOBAIN VITRAGE**
**Les Miroirs 18, avenue d'Alsace**
**F-92400 Courbevoie (FR)**

(72) Inventeur : **Girard, Philippe**
**5 rue Saint-Thomas**
**F-27000 Evreux (FR)**
Inventeur : **Petitcollin, Jean Marc**
**12 rue de Verdun**
**Le Plessis Brion F-60150 Thourotte (FR)**
Inventeur : **Piedany, Dany Ange**
**6 rue de la Montagne**
**F-60150 Thourotte (FR)**

(74) Mandataire : **Eudes, Marcel et al**
**Saint-Gobain Recherche 39 Quai Lucien Lefranc**
**F-93304 Aubervilliers Cedex (FR)**

Jouve, 18, rue St-Denis, 75001 Paris, France

## Description

La présente invention est relative à la fabrication de films ou de feuilles de bonne qualité optique formés d'une ou plusieurs couches de matières plastiques, par apport d'au moins une masse liquide telle une solution ou un mélange réactionnel sur un support en déplacement relatif continu par rapport à l'apport. Plus particulièrement, l'invention concerne un procédé et un dispositif pour la fabrication des produits susdits par coulée d'une masse liquide sur un support plan.

Le terme « feuille », utilisé par la suite désignera aussi bien un film mince formé d'une couche unique de matière plastique qu'une feuille de longueur indéterminée, formée d'une ou plusieurs couches de matières plastiques.

On connaît la fabrication de feuilles de matière plastique de bonne qualité optique, (c'est-à-dire d'une feuille de matière plastique qui a la qualité optique nécessaire pour pouvoir être utilisée dans un vitrage automobile par exemple) par une première opération de coulée, à partir d'une tête de coulée, de la matière liquide sur un tambour de grand diamètre en métal poli ou sur des bandes métalliques sans fin à surface polie, suivie d'une action de la chaleur qui provoque une évaporation du ou des solvants et/ou une réaction de polymérisation, et une solidification de la matière plastique in situ sur le support. La feuille formée est ensuite séparée de ce support.

Ce procédé n'est pas sans inconvénients, car la qualité du poli du support est affectée par sa réutilisation continuelle. Il s'ensuit une diminution de la qualité optique de la feuille au fur et à mesure de l'usure de ce support.

On connaît encore la fabrication de films ou feuilles en matière plastique par coulée sur un support formée d'une succession de feuilles de verre jointives.

Ces feuilles de verre sont également réutilisées, mais en quelques cycles d'utilisation, leur surface se marque par des rayures et autres défauts de surface qui obligent à les remplacer pour éviter des défauts optiques définitifs sur la feuille de matière plastique fabriquée.

Dans un tel procédé, l'existence de joints entre feuilles de verre crée des difficultés.

D'autre part, la mise en œuvre du procédé nécessite une consommation d'énergie importante étant donné qu'il faut chauffer non seulement la couche coulée, mais aussi le support lors de la solidification.

Pour éviter les altérations de la qualité optique de la feuille de matière plastique par usure ou endommagement de la surface du support de coulée, il a été proposé dans la demande de brevet français FR-A-2 230 487 de couler la matière liquide sur un ruban de verre sans fin se déplaçant, en continu, en position horizontale, immédiatement après la fabrication de celui-ci, par exemple sur un ruban de verre obtenu par le procédé de flottage. On est ainsi assuré de disposer en permanence d'une surface coulée exempte de défauts.

Ce procédé présente cependant au moins un inconvénient qui est celui de manquer de souplesse car les unités de fabrication de ruban de verre sont de taille importante et leur utilisation ne peut-être envisagée que dans une fabrication à très grande échelle de la feuille de matière plastique.

Dans un domaine technique différent de celui de l'invention, et d'après la demande de brevet français FR-A-2 162 636, on connaît la fabrication de feuilles de matière plastique par coulée d'une masse liquide sur un support souple tendu en téréphtalate du polyéthylène.

Par ce procédé on forme des feuilles de matière plastique de plusieurs millimètres d'épaisseur qui sont utilisées dans la fabrication de pièces moulées. Pour cette fabrication il n'est nullement besoin d'utiliser un support ayant une surface parfaitement lisse, exempte de petits reliefs, dénommés « peau d'orange », étant donné que le produit à fabriquer ne nécessite pas une qualité optique. Il s'ensuit que l'on retrouve sur la face de la feuille de matière plastique formée, face au contact du support, un aspect de « peau d'orange » qui est celui de ce genre de support.

L'invention propose de remédier aux inconvénients cités et de fabriquer une feuille de matière plastique de qualité optique bonne et constante, et à faible prix de revient, en consommant peu d'énergie.

Selon l'invention il est proposé un procédé de fabrication de feuilles de matière plastique de bonne qualité optique, par apport d'au moins une masse liquide sur un support plan mobile pour former au moins une couche et par chauffage assurant la solidification de la ou des couches formées, caractérisé en ce que la masse liquide fournissant la matière plastique est apportée sur un ruban souple tendu longitudinalement et transversalement dont la surface a été déplissée et rendue parfaitement lisse au préalable par chauffage (7, 25) immédiatement avant l'apport de la masse liquide, ce support défilant lui-même sur une table fixe (11, 23) placée au moins à l'emplacement où la masse liquide est apportée.

La matière plastique formant le support doit être étanche et inerte vis-à-vis de la masse liquide apportée, que ce soient des compositions organiques ou aqueuses, ou encore des composants chimiques réactifs. Elle doit résister élastiquement à une traction suffisante pour se maintenir en tension et cela durant tout le cycle de fabrication des matières plastiques et malgré les variations notables de température durant ce cycle. Elle doit encore pouvoir se séparer de la matière apportée. Elle doit enfin pouvoir s'enrouler pour former des bobines.

Des matières plastiques susceptibles de convenir comme support souple dans les diverses fabrications qui seront discutées plus loin sont notamment le téréphtalate de polyéthylèneglycol, par exemple le produit commercialisé sous l'appellation « Terphane » ou encore sous l'appellation « Mylar », et la cellulose régénérée par exemple le produit commercialisé sous l'appellation « Cellophane ».

Le support selon l'invention présente de très faibles épaisseurs, par exemple de l'ordre de 0,01 à 0,08 mm, alors que sa largeur peut dépasser deux mètres.

Par rapport aux fabrications connues utilisant la coulée sur un ruban de verre, l'invention, grâce aux faibles épaisseurs du support, permet de réduire fortement les durées de chauffage et de refroidissement nécessaires pour la fabrication de la feuille de matière plastique. Outre le gain d'énergie, ces réductions des durées ont également pour conséquences avantageuses des réductions correspondantes des longueurs de la ligne de fabrication.

Selon le procédé de l'invention, la tension exercée sur le support doit être suffisante aussi bien longitudinalement que latéralement, ceci afin d'obtenir un support de planéité quasi parfaite et par là des couches de matières plastiques fabriquées homogènes en épaisseur.

Avantageusement, selon le procédé de l'invention, on exerce une tension suffisante pour provoquer un léger allongement du support et éviter ainsi une modification de l'état de surface lors des changements de température. Ces changements de température sont généralement indispensables dans une fabrication d'une feuille de matière plastique par coulée sur un support. Par exemple, pour fabriquer une couche de polyuréthane, l'apport de la masse liquide s'effectue à des températures généralement assez peu élevées, et de l'ordre de 20 à 90 °C suivant la matière coulée, alors que la solidification de la couche par évaporation des solvants et/ou par polymérisation des composants réactionnels nécessite généralement une température plus élevée, de l'ordre de 120 °C par exemple.

La masse liquide apportée selon le procédé, notamment par coulée, peut être formée de solutions ou dispersions organiques et/ou aqueuses de monomères, prépolymères ou polymères, ou encore ces produits purs ou en mélange, susceptibles de fournir une feuille de bonne qualité optique.

La masse liquide apportée peut-être plus ou moins visqueuse. Elle peut contenir divers additifs tels des agents d'étalement, des primaires d'adhésion, des agents anti-UV, des anti-oxydants, des colorants...

Le procédé s'applique donc à la fabrication de feuilles de matière plastique très diverses de bonne qualité optique, et avec avantage, à la fabrication de feuilles utilisées dans les vitrages feuilletés, feuilles formées essentiellement d'au moins une couche de polyuréthane, par exemple à la fabrication d'une feuille comprenant une couche de polyuréthane thermodurcissable autocicatrisable : sur une telle couche les impressions locales disparaissent spontanément, après un court laps de temps, de l'ordre de quelques minutes, cette vitesse de disparition étant fonction de la nature de l'impression et de la température de la matière plastique. En même temps, cette couche est antilacérante, c'est-à-dire qu'en cas de bris d'un vitrage en verre, la couche recouvre les arêtes vives du verre et protège la face, les yeux ou d'autres parties du corps des passagers d'un véhicule par exemple, ou encore, lorsqu'il s'agit de lunettes de sécurité, la couche de protection peut éviter le contact des arêtes vives avec les yeux.

Il s'applique à la fabrication d'une couche de polyuréthane thermoplastique capable d'adhérer à un support en verre ou en matière plastique.

Il s'applique à la fabrication d'une feuille composite comme celle décrite dans la demande de brevet français FR-A-2 398 606, comprenant une couche antilacérante et autocicatrisable de polyuréthane thermodurcissable et une couche adhésive de polyuréthane thermoplastique.

Selon le procédé de l'invention, pour fabriquer une telle feuille à plusieurs couches, on forme sur le support souple tendu en matière plastique déplissé et rendu parfaitement lisse au préalable par chauffage, revêtu le cas échéant d'un agent de séparation, une première couche, qui peut être une couche de polyuréthane thermodurcissable, par coulée des composants réactionnels, puis sur la première couche polymérisée au moins partiellement, on forme la couche de polyuréthane thermoplastique par coulée d'une solution de ce polyuréthane, et évaporation du ou des solvants.

On peut encore procéder de la façon inverse en formant par coulée sur le support souple tendu une première couche de polyuréthane thermoplastique, puis sur une deuxième couche de polyuréthane thermodurcissable.

Le procédé s'applique également avec avantage à la fabrication d'une couche adhésive susceptible ultérieurement de se lier chimiquement avec les éléments d'un vitrage du feuilleté, et qui comprend essentiellement un polyuréthane bloqué contenant des groupes isocyanates masqués par un agent bloquant.

Une telle couche est décrite dans la demande de brevet français FR-A-2 470 682. Elle est formée essentiellement d'un polyuréthane bloqué comprenant des groupes isocyanates masqués par un agent bloquant, le polyuréthane bloqué étant dispersable ou soluble dans l'eau et formé à partir d'un composant polyol partiellement réticulé par des agents de réticulation, tels des alcools de fonctionnalité supérieure ou égale à 3, et un composant isocyanate, le rapport numérique des groupes NCO aux groupes OH libres étant compris entre 1,01 et 3.

Pour former ce polyuréthane on peut utiliser en tant que composé isocyanate des isocyanates aliphatiques, cyclo-aliphatiques, aliphatiques-aromatiques non sensibles à la lumière et pouvant contenir des fonctions urée ou encore des biurets d'isocyanates. On peut utiliser par exemple les isocyanates difonctionnels aliphatiques comme le 1,6-hexanediisocyanate, le 2,2,4-trimé- thyl-1,6-hexanediisocyanate, le 1,3 bis- (isocyanatométhyl) benzène, le bis-(4-isocyanatocyclohexyl) méthane, le bis-(3-méthyl-4-isocyanatocyclohexyl) méthane, le 2,2-bis (4-isocyanatocyclohexyl) propane et le 3-isocyanatométhyl-3,5,5-triméthylcyclohexylisocyanate.

En tant que composant polyol pour former le polyuréthane bloqué, on peut utiliser des polyétherdiols ou des polyesterdiols de masse moléculaire comprise entre 450 et 2 000 (des masses moléculaires plus importantes peuvent entraîner une diminution notable des propriétés d'adhésion du polyuréthane), des polycaprolactones de masse moléculaire comprise entre 500 et 2 000, des polybutadiènes à fonction hydroxyle ou carboxyle, seuls ou en mélange, des diols courts de masse moléculaire comprise entre 50 et 200, et des agents réticulants tels des alcools ou des amines de fonctionnalité supérieure ou égale à 3, de masse moléculaire comprise respectivement entre 800 et 3 000 ou 200 et 1 000. On utilise par exemple les polyols obtenus par réaction d'alcools polyfonctionnels avec des diacides aliphatiques ou des éthers cycliques. Les alcools polyfonctionnels sont par exemple le 1,2-éthanediol, le 1,2-propanediol, le 1,3-butanediol, le 1,4-butanediol, le 2,2-diméthyl-1,3-propanediol, le 1,6-hexanediol, le 2-méthyl-2,4-pentanediol, le 3-méthyl-2,4-pentanediol, le 2-éthyl-1,3-hexanediol, le 2,2,4 triméthyl-1,3-pentanediol, le diéthylèneglycol, le triéthylèneglycol, les polyéthylèneglycols, le dipropylèneglycol, le tripropylèneglycol, les polypropylèneglycols ou le 2,2-bis (4-hydroxycyclohexyl) propane, éventuellement à l'état de mélange, le 1,2,3-propanetriol, le 2,2-bis(hydroxyméthyl) 1-1 propanool, le 2,2-bis hydroxyméthyl-1-butanol (triméthylolpropane), le 1,2,4-butanediol, le 1,2,6-hexanetriol, le 2,2-bis (hydroxyméthyl)1,3-propanediol et le 1,2,3,4,5,6-hexanehexol, le cyclohexanediméthanol.

Les diacides aliphatiques sont par exemple l'acide malonique, l'acide succinique, l'acide glutarique, l'acide adipique, l'acide subérique et l'acide sébacique.

On utilise généralement, en tant que composant polyol au moins un polyétherpolyol ou polyesterpolyol formé à partir de plusieurs diols et d'au moins un agent réticulant, tels des alcools de fonctionnalité supérieure ou égale à 3, des amines de fonctionnalité supérieure ou égale à 3. On obtient ainsi une couche adhésive de bonne qualité optique et présentant après déblocage des fonctions isocyanates masquées, de bonnes propriétés d'adhésion.

Comme agents bloquants pour protéger ou masquer les fonctions isocyanates libres du polyuréthane, on peut utiliser : le phénol, l'ortho, le méta ou le para-crésols et leurs mélanges, le xylénol, le résorcinol, l'hydroquinone, le catéchol, le guaïacol, les naphtols, les alkylphénols tels les butylphénols, l'octylphénol, le nonylphénol, le 2,4-diisobutylphénol et ses dérivés, le 4-hydroxybiphényle, la 6-hydroxytétraline, les bisphénols tels que l'isopropylidène-4,4'-bisphénol, des lactames tels que le lauryllactame, 1'- caprolactame, des oximes telles que la méthyléthylcétoxime, l'acétoxime, la cyclohexanoneoxime, l'hydroxylamine, l'acide cyanhydrique, le bisulfite de sodium, le tertiobutanol, le malonate de diétyle, l'acétoacétate d'éthyle, le 2-4-pentanedione, l'acétylacétone, la diphénylamine, la monométhylaniline, les aryl-mercaptans, les alkylmercaptans, la 1-phényl-3-méthyl-5-pyrazolone, etc.

La mise en solution ou dispersion dans l'eau peut être assurée pour des colles anioniques par l'emploi de diols à fonction acide, pour des colles cationiques par l'emploi de diols comportant un atome d'azote telles la N-méthyldiéthanolamine, le N-phényldiéthanolamine, une dialkylaminoéthylamine. On peut utiliser ces agents de solubilité à raison de 4 % à 9 % en poids de la solution et de préférence de 4,5 % à 7,5 % en poids. On fabrique des solutions ou des des dispersions fines aqueuses contenant généralement de 10 % à 65 % d'extrait sec et de préférence de 25 % à 45 %.

Une couche formée à l'aide de composants ci-dessus peut être utilisée comme couche adhésive entre des feuilles de verre et/ou de matière plastique. Elle peut avoir des propriétés d'absorbeur d'énergie. Elle peut encore être utilisée pour l'adhésion de la couche de polyuréthane thermodurcissable déjà citée sur un support en verre ou en matière plastique.

Le procédé selon l'invention s'applique à la fabrication de feuilles de bonne qualité optique, à une ou plusieurs couches dans une gamme d'épaisseurs étendue par exemple de 0,01 millimètre à 1 millimètre environ.

Après les opérations d'apport de la masse liquide, et de solidification de la ou des couches par évaporation de liquides tels les solvants et/ou par polymérisation, la feuille formée est séparée du support souple tendu. Cette séparation peut être retardée et ne s'effectuer qu'au moment de l'utilisation de la feuille. Ceci constitue un des aspects de l'invention : former une feuille de matière plastique de bonne qualité optique par coulée sur un support souple tendu que l'on peut utiliser ensuite comme intercalaire de stockage.

L'intercalaire de stockage peut être le support lui-même en téréphtalate de polyéthylèneglycol ou en cellulose régénérée. Ce peut être également un film mince d'agent de séparation préalablement déposé sur le support souple tendu tel un film d'alcool polyvinylique. Dans ce cas, après fabrication de la feuille de matière plastique, celle-ci est séparée du support souple tendu en même temps que le film d'alcool polyvinylique, ce dernier n'étant séparé de la feuille, par lavage par exemple, qu'au moment de l'utilisation de cette feuille de matière plastique.

L'invention propose également un dispositif pour la fabrication de feuilles de matière plastique de bonne qualité optique, comprenant des moyens pour l'apport d'au moins une masse liquie, un support plan mobile sur lequel est déversé cette masse liquide, des moyens de chauffage assurant la solidification de la ou des couches formées, caractérisé en ce que le support est un support souple tendu longitudinalement et transversalement par des moyens de traction, déplissé et rendu lisse par un chauffage au préalable immédiatement avant l'apport de la masse liquide en même temps qu'il est supporté horizontalement sur sa largeur utile au moins à l'emplacement où la masse liquide est apportée.

La ligne de coulée se répartie en plusieurs zones : au moins une zone de préparation du support souple tendu, au moins une zone d'apport d'une masse liquide ou zone de coulée, au moins une zone de solidification de la matière apportée et au moins une zone de refroidissement avant bobinage de la feuille formée.

Selon l'invention, la ligne de coulée comprend un distributeur d'un ruban en matière souple de faible épaisseur, pouvant être tendu pour former un support plan, notamment en téréphtalate de polyéthylèneglycol ou en cellulose régénérée, des moyens exerçant sur ce ruban des efforts de traction longitudinalement et transversalement de façon à le tendre et le rendre le plus parfaitement plan et horizontal possible, des moyens pour entraîner ce ruban dans un mouvement d'avance continu, des moyens de chauffage permettant le déplissage et le lissage du ruban avant la coulée, des moyens pour déposer en au moins un endroit la masse liquide sur le ruban, des moyens de chauffage permettant la solidification de la masse liquide par polymérisation des composants et/ou évaporation des produits volatils, des moyens supportant horizontalement le ruban sur sa largeur utile, au moins à l'emplacement où la masse liquide est apportée.

On connaît d'après le brevet US-A-1 862 541 des moyens exerçant des efforts de traction longitudinalement et transversalement sur un ruban. Suivant une réalisation de la ligne de coulée, les moyens exerçant des efforts de traction sur le ruban sont essentiellement un rouleau tracteur situé en bout de ligne, associé à au moins un rouleau résistant situé dans la partie amont de la ligne, et des roulettes dites roulettes de bords, qui, des deux côtés du ruban souple, au-dessus et au-dessous dudit ruban exercent sur lui des forces à composantes latérales vers l'extérieur. Les roulettes de bord peuvent avoir une action réglable ; leur angle d'inclinaison par rapport à la direction d'avance du ruban pouvant varier, de même que leurs efforts de pincement.

Dans une variante, le ruban souple peut être tendu latéralement par des pinces qui se déplacent simultanément et parallèlement avec le ruban.

En bout de ligne de coulée, des moyens permettent l'enroulement de la feuille formée.

Dans une réalisation du dispositif, les moyens supportant horizontalement le ruban souple sur sa largeur utile, c'est-à-dire la largeur recouverte par la masse liquide au moins aux emplacements où la masse liquide est apportée, peuvent être des rouleaux disposés aux emplacements indiqués sous le ruban souple, et le cas échéant, à d'autres emplacements de la ligne de coulée.

Dans une variante, les moyens supportant horizontalement le ruban souple de la ou des coulées aux emplacements et éventuellement en d'autres endroits, sont avantageusement des plaques métalliques ou en verre supportées elles-mêmes par des organes adéquats, par exemple des rouleaux, ou directement par un bâti lui-même.

Cette variante est avantageuse, car les plaques peuvent en même temps servir à répartir le chauffage du support par zones, par conduction, en étant elles-mêmes chauffées par des résistances électriques par exemple.

La ligne de coulée peut encore comprendre, lorsque le support n'est pas utilisé comme intercalaire de stockage, des moyens de séparation de la feuille dudit support, le cas échéant, de la feuille et de son agent de séparation du support.

Pour éviter des défauts optiques de la feuille dus à la présence de corps étrangers, la ligne de coulée peut encore comprendre des moyens empêchant les grains de poussière et d'autres particules de se déposer sur la feuille fabriquée et éventuellement sur le support, surtout lorsque celui-ci est utilisé comme intercalaire de stockage, et également des moyens de nettoyage pour éliminer ces grans de poussière éventuellement déjà déposés.

Les moyens pour éviter le dépôt de particules peuvent être des écrans physiques. Ainsi, on peut placer l'ensemble de la ligne de coulée, ou des parties de cette ligne, telles des zones de coulée, et de solidification dans une enceinte contenant de l'air filtré et dépoussiéré.

Les moyens pour éviter le dépôt des particules peuvent être aussi des barres électrostatiques qui ionisent l'atmosphère autour de la feuille.

Les moyens pour nettoyer la feuille peuvent être des brosses, des lames agissant comme des râcles, des éléments d'essuyage, associés le cas échéant à des organes d'aspiration.

Dans une variante, les moyens supportant le ruban souple, à l'exclusion généralement du ou des emplacements pour la coulée, sont des fils métalliques tendus entre deux barres horizontales disposées latéralement de part et d'autre de la ligne de coulée. Ces fils peuvent être placés à distances déterminées les uns des autres, ces distances étant généralement plus petites à proximité aval de la coulée, là où la matière coulée est encore très fluide.

Un des avantages de l'utilisation de fils métalliques provient du fait que les frottements de la feuille support de coulée avec ces fils sont pratiquement supprimés et il s'ensuit que l'électricité statique créée notamment par ces frottements est fortement réduite.

D'autre part, ces fils conducteurs sont susceptibles d'éliminer ces charges électriques.

Un autre avantage de l'utilisation de fils métalliques réside dans le fait que l'on supprime ainsi les grains de poussière qui peuvent se loger entre les feuilles support rigides et le support souple tendu, et qui sont susceptibles d'endommager le support souple ou encore de provoquer des défauts de surface sur les couches coulées.

D'autres caractéristiques et avantages ressortiront de la description qui suit d'exemples, décrits en référence aux figures, de la ligne de coulée selon l'invention.

La figure 1 représente schématiquement une ligne de coulée utilisée pour la fabrication d'une feuille monocouche.

La figure 2 représente schématiquement une variante utilisée pour la fabrication d'une feuille à plusieurs couches.

La figure 3 représente en vue de plan une partie de la variante représentée dans la figure 2.

La figure 4 représente une section transversale de la variante précédente selon IV-IV.

La figure 5 représente un couple de roulettes de bords.

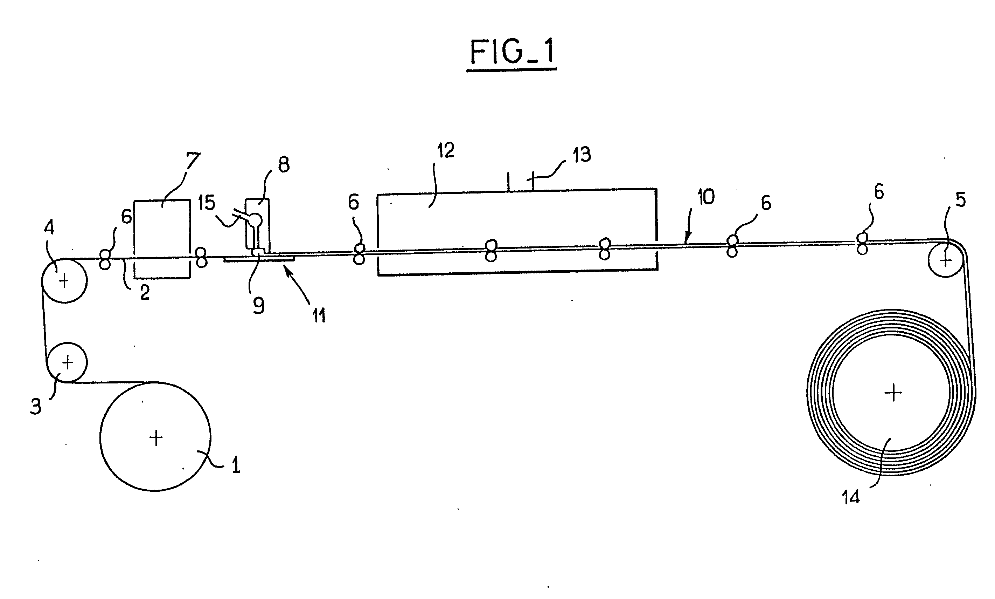

Comme représenté sur la figure 1, la ligne de coulée comprend une bobine 1 d'alimentation d'un ruban 2 d'environ 1,30 mètre de large et d'environ 0,03 mm d'épaisseur en téréphtalate de polyéthylèneglycol, par exemple le produit commercialisé sous l'appellation « Terphane » par la société RHONE-POULENC, ou encore le produit commercialisé sous l'appellation « Mylar » par la société DUPONT DE NEMOURS.

Après passage autour des rouleaux de renvoi 3, 4 faisant également office, le cas échant, de rouleaux de déplissage pour les plis larges, le ruban subit de la part d'un rouleau tracteur 5 situé en bout de ligne de fabrication une traction longitudinale qui le tend et le fait avancer à vitesse uniforme. Disposés régulièrement de chaque côté du ruban, des couples de roulettes 6, inclinées par rapport à la direction d'avance du ruban, viennent pincer les bords dudit ruban et exercer sur lui des forces à composantes latérales vers l'extérieur.

Sous les actions simultanées du rouleau tracteur 5 dont la surface caoutchoutée présente une adhérence suffisante sur le ruban d'une part, et des roulettes inclinées d'autre part, le ruban est tendu à partir du rouleau de renvoi 4 afin d'être le plus proche possible d'un plan horizontal.

Dans la partie amont de la ligne de coulée, le ruban passe à travers une enceinte 7 équipée de résistances électriques qui chauffent le ruban afin d'affiner son déplissage, et de supprimer la « peau d'orange » de sa surface.

En aval de l'enceinte chauffante et au-dessus du ruban, une tête de coulée 8 à large fente mince sert à déverser de façon régulière et contrôlée la matière liquide 9 propre à former la feuille de matière plastique 10. Une tête de coulée convenable est par exemple celle décrite dans la demande de brevet français FR-A-2 347 170.

A l'aplomb de la tête de coulée, sous le ruban tendu, une plaque 11 d'épaisseur suffisante, en verre ou en acier inoxydable par exemple, supporte le ruban en position horizontale. Elle peut être chauffée par des résistance électriques pour pouvoir le cas échéant, par conduction, élever la température du ruban afin de lui donner les conditions idéales de température adaptées à la coulée de la matière plastique.

En aval de la tête de coulée, le ruban passe à travers une enceinte chauffée 12, ou four de séchage, dont le rôle est d'élever la température de la couche coulée pour la solidifier soit par simple évaporation des liquides volatils, s'échappant par un conduit d'aspiration 12, soit par polymérisation des composants coulés.

En aval du four de séchage, le ruban est encore tendu sur une longueur suffisante pour permettre à la couche formée, solidifiée, de se refroidir.

En bout de ligne de fabrication, le dispositif comprend un rouleau 14, autour duquel s'enroule l'ensemble de la feuille de patière plastique et du ruban ayant fait office de support.

Les longueurs des différentes zones de la ligne de coulée dépendent de la couche à former.

Le fonctionnement du dispositif est maintenant décrit dans le cadre d'une fabrication d'une couche de matière plastique comprenant essentiellement un polyuréthane bloqué, et qui peut être utilisée comme couche adhésive dans un vitrage feuilleté.

Pour fabriquer cette couche, on prépare au préalable une solution ou une dispersion de polyuréthane bloqué en prenant de façon connue le composant isocyanate en excès et en bloquant les fonctions NCO libres par un agent de blocage. Les composants de polyuréthane sont choisis parmi ceux décrits précédemment.

Pour former la couche de matière plastique, on met en route le rouleau tracteur 5 qui provoque la mise sous tension du ruban souple 2 et son déplacement à une vitesse d'environ 0,5 mètre par minute. Le ruban souple est tendu entre le rouleau de renvoi amont 4 et le rouleau tracteur 5, ses bords sont pincés et tirés vers l'extérieur par les roulettes 6. La longueur de la ligne est d'environ 5 mètres.

Dans l'enceinte 7, le ruban est chauffé à une température de 80-90 °C environ. Ce chauffage combiné à la tension procure au ruban une surface lisse, déplissée et exempte de peau d'orange.

Un conduit 15 amène la solution ou la dispersion aqueuse de polyuréthane préalablement préparée vers la tête de coulée 8.

La masse liquide déposée par la tête de coulée forme sur le ruban souple tendu une couche liquide de matière plastique d'épaisseur uniforme, d'une largeur de 1 mètre environ, qui se fige progressivement en une couche solide 10 par évaporation de l'eau en passant à travers le four de chauffage 12 porté à une température d'environ 120 °C. A la sortie du four de chauffage la couche de matière plastique est entièrement solidifiée et présente une épaisseur uniforme d'environ 0,03 mm. Elle se refroidit ensuite à l'air libre avant d'être enroulée sur la bobine 14 en même temps que le support en TERPHANE sui sert d'intercalaire.

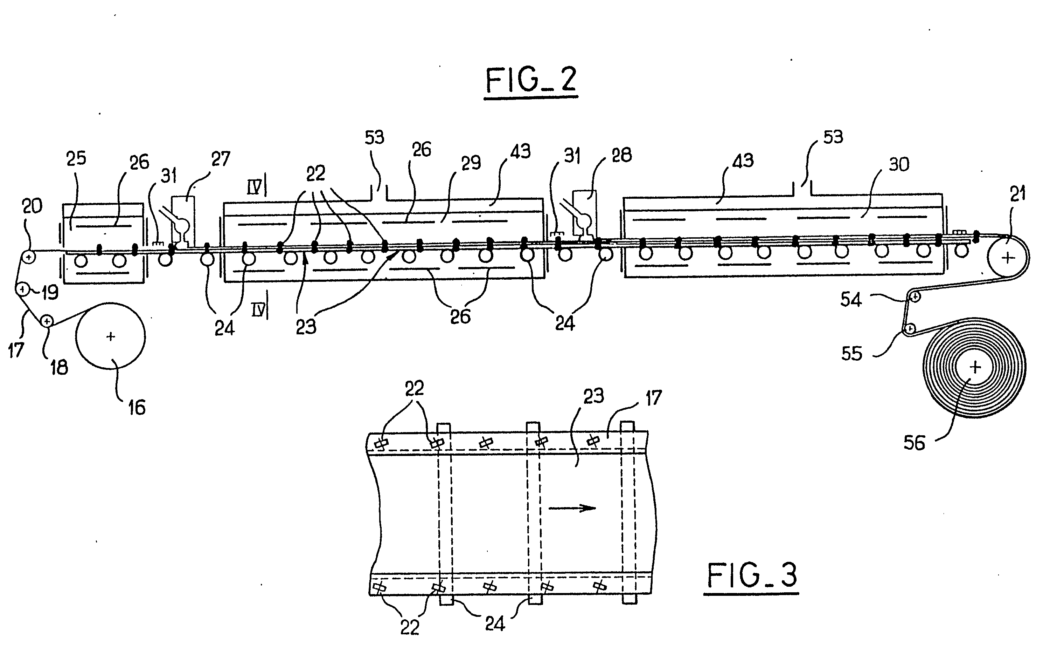

La figure 2 représente une variante d'une ligne de fabrication selon l'invention. Cette ligne est équipée pour fabriquer une feuille de matière plastique à deux couches, de haute qualité optique.

Cette ligne comprend, comme dans la variante précédente, une bobine d'alimentation 16, d'un ruban 17 d'environ 1,3 mètre de large et d'environ 0,03 mm d'épaisseur en téraphtalate de polyéthylèneglycol.

Après passage autour des rouleaux de renvoi 18, 19 et 20 faisant généralement office, le cas échéant, de rouleaux de déplissage, le ruban 17 subit de la part du rouleau tracteur 21, une traction longitudinale qui le tend et le fait avancer à vitesse uniforme. En même temps, le ruban subit de la part de couples de roulettes 22 disposées de chaque côté, légèrement inclinées par rapport à sa direction d'avance dudit ruban, comme représenté sur la figure 3, des forces de traction obliques.

Sur l'essentiel de l'étendue de la ligne de fabrication, le ruban 17 est disposé au-dessus des plaques de verre 23 formant une sole continue immobile reposant sur des rouleaux 24 supportés par un bâti non représenté.

Dans la partie amont de la ligne de coulée, le ruban passe à travers une enceinte 25 équipée de résistances électriques 26 qui chauffent le ruban afin d'affiner son déplissage, et de lui donner un bon état de surface, exempt de « peau d'orange ».

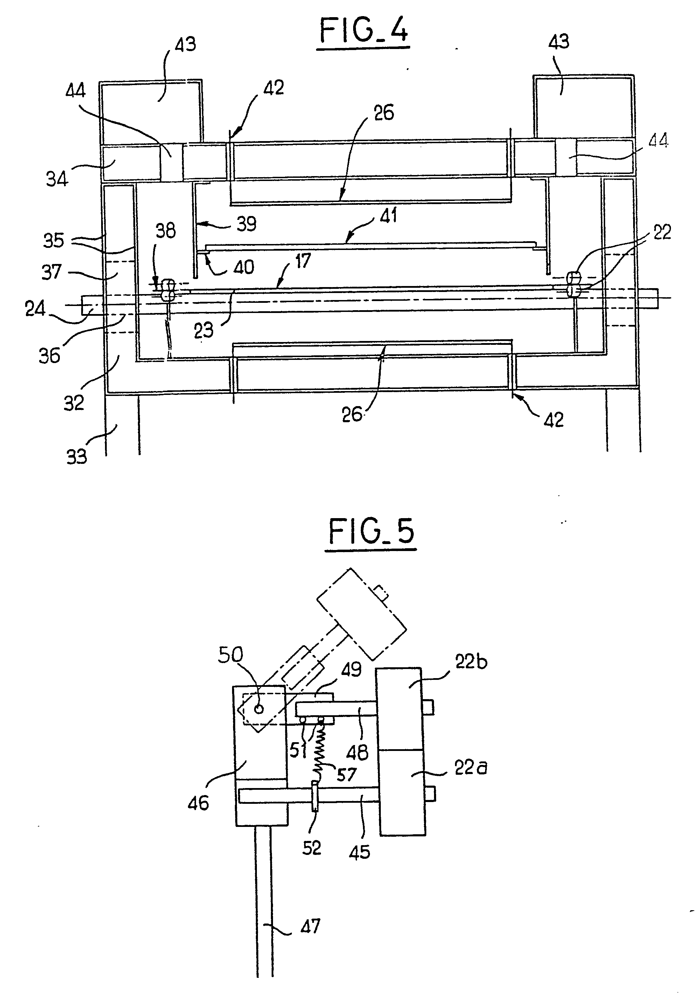

En aval de cette première enceinte, la ligne de coulée comprend deux têtes de coulée 27 et 28 à large fente mince comme dans la variante précédente, suivies chacune d'un four de séchage ou solidification 29 et 30. Ces fours sont formés d'une suite de caissons comme décrit par la suite en relation avec la figure 4.

La ligne de coulée peut encore comprendre des moyens pour éliminer l'électricité statique du ruban support et des couches de matière plastique formées ou en voie de formation. Ces moyens peuvent être des barres électrostatiques 31.

Éventuellement, la ligne de coulée peut comprendre des moyens de nettoyage pour éliminer les poussières et autres particules déposées sur le ruban support et sur les couches de matière plastique. Ces moyens peuvent être des râcles, des brosses, des éléments d'essuyage, des moyens d'aspiration.

Des détecteurs non représentés repérant la position du ruban, transversalement, peuvent être prévus. Lors d'un glissement latéral du ruban, ils peuvent alors actionner un dispositif de recentrage automatique du ruban, par exemple en agissant sur la force d'action de certaines roulettes de bords.

La figure 4 représente une section d'un four de séchage ou solidification. Le four est formé d'une suite de caissons comprenant chacun une partie inférieure 32 reposant sur le bâti 33 et une partie supérieure 34 pouvant être séparée de la partie inférieure 32 afin de permettre l'accès au ruban le cas échéant. Les caissons des extrémités sont équipés d'une paroi frontale 101 présentant une ouverture pour le passage du ruban et des couches formées. Les caissons, formés par une double paroi en tôle 35 garnie d'isolant, présentent des ouvertures latérales 36 et 37 pour le passage des rouleaux supportant les plaques de verre 23 disposées sous le ruban 17 ainsi que pour l'accès aux roulettes 22, permettant ainsi leur réglage. Les roulettes 22 pincent les bords 38 du ruban souple 17 à environ deux centimètres des extrémités. Au-dessus du ruban, le caisson comprend des cloisons verticales 39 qui supportent par l'intermédiaire de cornières 40, des plaques de verre supérieures 41, formant un tunnel de protection du ruban et des couches formées ou en formation contre les poussières.

Les résistances électriques 26, reliées à une source de courant par les conducteurs 42, sont disposées de chaque côté du ruban. Selon la nature de la couche à former, il peut être préférable de chauffer uniquement par le dessous ou par le dessus ou encore des deux côtés.

La partie supérieure des caissons est surmontée d'un double canal de ventilation 43 relié par des ouvertures 44 à la partie centrale des caissons, et par le conduit 53 à des moyens annexes d'aspiration non représentés. Ce double canal de ventilation a pour rôle d'évacuer les vapeurs des solvants et autres produits volatils au cours de la solidification de la couche.

La figure 5 représente un couple de roulettes de bord 22. Ces roulettes en caoutchouc, montées sur roulement à billes autour d'axes fixes, ont un diamètre d'environ 3 centimètres et une largeur d'environ 1 centimètre. L'axe 45 de la roulette inférieure 22a est fixé sur le corps principal 46 surmontant une tige filetée 47 permettant le réglage en inclinaison et en hauteur de l'ensemble par rapport au bâti du dispositif. L'axe 48 de la roulette supérieure 22 b est fixé à une pièce 49 pivotant autour d'un axe horizontal 50. En position de travail, les deux axes 45 et 48 sont parallèles. (La roulette supérieure est représentée en trait mixte dans une position intermédiaire entre la position de travail et celle de repos.)

Des trous 51 percés dans la pièce pivotante 48 et dans une collerette 52 de l'axe inférieur 45 permettent l'accrochage éventuel de ressorts 57 déterminant la force de pincement du ruban entre les roulettes.

Le fonctionnement de cette variante du dispositif est décrit pour la fabrication d'une feuille de matière plastique comprenant une couche antilacérante et autocicatrisable formée essentiellement d'un polyuréthane thermodurcissable et une couche ayant des propriétés d'adhésion formée essentiellement d'un polyuréthane bloqué comme décrit précédemment.

Le ruban de TERPHANE 17 fourni par la bobine 16 passe sur les rouleaux de renvoi 18, 19 et 20 et il est tendu du fait de la traction du rouleau tracteur et de la résistance des rouleaux situés en amont, le rouleau tracteur lui transmettant en outre un mouvement d'avance régulier à une vitesse de 0,5 mètre par minute d'une part, et par les couples de roulettes 22 d'autre part, ces couples étant espacés de 50 centimètres par exemple.

En passant à travers l'enceinte 25, le ruban est chauffé à l'aide des résistances 26 à une température de 80-90 °C environ qui achève le déplissage et élimine l'aspect de « peau d'orange » de la surface du ruban.

La température du support est régularisée sur la ligne de coulée par les plaques de verre 23 et 41 que des résistances électriques 26 chauffent aux températures désirées.

A l'aide de la première tête de coulée 27, on apporte la masse liquide susceptible de former la couche ayant des propriétés d'adhésion c'est-à-dire, ici une solution ou une dispersion aqueuse du polyuréthane bloqué. La couche apportée passe ensuite à travers le four 29, porté par les résistances électriques 26 à une température d'environ 120 °C. L'eau est évaporée ; les vapeurs s'échappent par les ouvertures 44 et sont aspirées par le canal de ventilation 43 surmonté du conduit d'évaporation 53.

A la sortie du four 29, la couche formée a environ 0,02 milimètres d'épaisseur.

A l'aide de la deuxième tête de coulée 28, on dépose sur la première couche solidifiée la masse contenant le mélange de composants réactifs susceptibles de former le polyuréthane thermodurcissable.

La deuxième couche se solidifie par polymérisation, notamment lors de son passage dans le deuxième four 43, élevé à une température de 100 °C environ. A la sortie du four de séchage 43 cette deuxième couche a une épaisseur d'environ 0,5 mm. Puis la feuille à deux couches est refroidie à l'air libre. Après passage autour du rouleau tracteur 21 et des rouleaux de renvoi 54 et 55, elle est ensuite enroulée avec le support en TERPHANE autour du rouleau 56 puis stockée.

Cette même ligne de coulée peut-être utilisée pour la fabrication d'une feuille de matière plastique à deux couches comme décrite dans la demande de brevet français FR-A-2 398 606, à savoir une couche de matière thermoplastique et une couche de polyuréthane thermodurcissable.

Dans ce cas, on procède comme précédemment, mais on forme une première couche par coulée d'une solution organique de la matière thermoplastique décrite dans la publication de brevet susdite, on évapore les solvants par passage dans le premier four de séchage à une température de 100 °C environ, puis on coule la deuxième couche de polyuréthane thermodurcissable.

On peut également fabriquer cette feuille à deux couches par mise en œuvre de la deuxième ligne de fabrication en formant tout d'abord une couche de polyuréthane thermodurcissable puis après polymérisation au moins partielle de cette couche, en formant dessus une couche adhésive.

. Dans ce cas, il est préférable de traiter le ruban support avant la coulée des composants réactifs pour éviter une adhésion trop forte de la couche ultérieurement formée, avec le support. Un tel traitement peut consister en un dépôt avant ou après chauffage du ruban par pulvérisation d'un agent de séparation, par exemple un produit d'addition d'oxyde d'éthylène modifié comme décrit dans la demande de brevet français FR-A-2 383 000.

On peut encore former sur le ruban de TERPHANE un film d'alcool polyvinylique qui peut alors éventuellement remplacer le support dans son rôle d'intercalaire de stockage.

Par mise en œuvre de la deuxième ligne de fabrication, on peut réaliser également une feuille à deux couches d'une même matière plastique, par exemple lorsqu'on désire obtenir une épaisseur plus importante.

D'autres lignes de fabrication, conformes à l'invention peuvent comprendre un nombre de postes de coulée et de séchage variable et supérieur à 2.

Par exemple, pour fabriquer une feuille de matière plastique ayant une épaisseur suffisante pour pouvoir présenter des propriétés d'absorbeur d'énergie, on peut former une feuille multi-couche par coulée de trois, quatre couches successives ou plus, par exemple en polyuréthane thermoplastique comme décrit dans la demande de brevet français FR-A-2 398 606, ou en polyuréthane bloqué comme décrit précédemment.

Les feuilles de matière plastique fabriquées selon l'invention présentent toutes une bonne qualité optique et par là, peuvent être utilisées dans la fabrication de vitrages feuilletés tels que des vitrages de véhicules à moteur, de bâtiments, de masques, des écrans, des lunettes, etc...

Dans le cadre de l'invention, on peut encore utiliser le support souple tendu comme un des éléments entrant dans la composition d'une feuille à plusieurs couches. Par exemple, on peut fabriquer une feuille composite comprenant une couche de téréphtalate de polyéthylèneglycol revêtue d'une couche antilacérante et autocicatrisable de polyuréthane thermodurcissable. La face non revêtue du support de coulée peut être ultérieurement munie d'une couche adhésive. Avantageusement, on peut utiliser un support autocollant ayant une face adhésive et couler sur la face opposée une couche antilacérante et autocicatrisable. On peut ainsi fabriquer une feuille composite que l'on peut coller *in situ* sur un support en verre ou en matière plastique.

## Revendications

1. Procédé de fabrication de feuilles de matière plastique (10) de bonne qualité optique, par apport d'au moins une masse liquide (9) sur un support plan mobile pour former au moins une couche et par chauffage assurant la solidification de la ou des couches formées, caractérisé en ce que la masse liquide fournissant la matière plastique est apportée sur un ruban souple (2, 17) tendu longitudinalement et transversalement dont la surface a été déplissée et rendue parfaitement lisse au préalable par chauffage (7, 25) immédiatement avant l'apport de la masse liquide, ce support défilant lui-même sur une table fixe (11, 23) placée au moins à l'emplacement où la masse liquide est apportée.

2. Procédé selon la revendication 1, caractérisé en ce que la masse liquide (9) fournissant la matière plastique est apportée sur un ruban souple (2, 17) tendu de faible épaisseur en une matière choisie parmi le téréphtalate de polyéthylèneglycol et la cellulose régénérée.

3. Procédé selon l'une des revendication 1 ou 2, caractérisé en ce que la masse liquide (9) est apportée alors que le support souple (2, 17) a subi un léger allongement.

4. Procédé selon l'une des revendications 1 à 3, caractérisé en ce que la masse liquide (9) fournissant la matière plastique est apportée sur un support souple (2, 17), tendu, préalablement revêtu d'un agent de séparation.

5. Procédé selon la revendication 4, caractérisé en ce qu'une fois la matière plastique solidifiée, on la sépare avec l'agent de séparation du support de coulée (2, 17).

6. Procédé selon une des revendications 1 à 3, caractérisé en ce que le support souple (2, 17) tendu entre dans la composition de la feuille de matière plastique (10).

7. Procédé selon une des revendications 1 à 6, caractérisé en ce qu'on apporte successivement plusieurs masses liquides sur le ruban souple (2, 17) tendu.

8. Procédé selon la revendication 7, caractérisé en ce que la feuille de matière plastique (10) a des propriétés d'absorbeur d'énergie.

9. Procédé selon la revendication 7, caractérisé en ce que la matière formant les couches successives est différente d'une couche à l'autre.

10. Procédé selon une des revendiations 7 à 9, caractérisé en ce qu'au moins une masse liquide (9), apportée forme une couche de polyuréthane.

11. Procédé selon la revendication 10, caractérisé en ce que la couche de polyuréthane est une couche de polyuréthane thermodurcissable antilacérante et autocicatrisable.

12. Procédé selon l'une des revendications 10 ou 11, caractérisé en ce qu'une masse liquide (9) apportée forme une couche de polyuréthane ayant des propriétés d'achésion.

13. Procédé selon la revendication 12, caractérisé en ce que la couche de polyuréthane ayant des propriétés d'adhésion est un polyuréthane bloqué.

14. Procédé selon une des revendications 6 à 13, caractérisé en ce que le support souple (2, 17) tendu présente une face adhésive.

15. Dispositif pour la fabrication de feuilles de matière plastique de bonne qualité optique, comprenant des moyens (8, 17, 28) pour l'apport d'au moins une masse liquide (9), un support plan mobile sur lequel est déversé cette masse liquide, des moyens de chauffage (12, 29, 30) assurant la solidification de la ou des couches formées, caractérisé en ce que le support est un support souple (2, 17) tendu longitudinalement et transversalement par des moyens de traction (4,5, 20, 21,6 22), déplissé et rendu lisse par un chauffage au préalable immédiatement avant l'apport de la masse liquide en même temps qu'il est supporté horizontalement sur sa largeur utile au moins à l'emplacement où la masse liquide est apportée.

16. Dispositif selon la revendication 15, caractérisé en ce que le support souple (2, 17) tendu est choisi parmi le téréphtalate de polyéthylèneglycol et la cellulose régénérée.

17. Dispositif selon une des revendications 15 ou 16, caractérisé en ce que le support souple (2, 17) a une épaisseur comprise entre 0,01 et 0,08 millimètres.

18. Dispositif selon la revendication 15, caractérisé en ce qu'il comprend : un distributeur (1, 16) d'un support souple (2, 17) de faible épaisseur, des moyens pour tendre ce support longitudinalement (4, 5, 20, 21) et transversalement (6, 22) et le rendre le plus plan possible, des moyens (7, 26) pour chauffer ce support au préalable avant l'apport de la masse (9) à couler, des moyens (8, 17, 28) pour l'apport de la masse à couler, des moyens (11, 23) supportant horizontalement le support sur la largeur utile, au moins à l'emplacement où la masse liquide est apportée.

19. Dispositif selon une des revendications 15 à 18, caractérisé en ce que les moyens pour tendre le support souple sont au moins un rouleau tracteur (5, 21) associé à au moins un rouleau résistant (4, 20) et des organes (6, 22) exerçant des forces latérales vers l'extérieur.

20. Dispositif selon la revendication 19, caractérisé en ce que le rouleau tracteur (5, 21) est associé à des couples de roulettes (6, 22) disposées le long des bords du support (2, 17) et orientées vers l'extérieur par rapport à la direction d'avance du support.

21. Dispositif selon la revendication 20, caractérisé en ce que les roulettes (6, 22) disposées le long des bords du support (2, 17) ont des actions réglables.

22. Dispositif selon la revendication 21, caractérisé en ce que les roulettes (6, 22) sont équipées d'un système permettant de modifier leur orientation par rapport à la direction d'avance du support (2, 17).

23. Dispositif selon une des revendications 20 ou 21, caractérisé en ce que les roulettes comprennent au moins un ressort (57) permettant le réglage de leur action de pinçage sur le support (2, 17).

24. Dispositif selon une des revendications 15 à 23, caractérisé en ce qu'il comprend au moins un four de séchage ou solidification (12, 29, 30) formé d'une suite de caissons comprenant chacun des plaques de verre (23) et des résistances électriques (26).

25. Dispositif selon une des revendications 15 à 24, caractérisé en ce que la zone de coulée et de solidification est située dans une enceinte contenant de l'air filtré.

26. Dispositif selon une des revendications 15 à 25, caractérisé en ce qu'il comprend des moyens de nettoyage.

27. Dispositif selon une des revendications 15 à 26, caractérisé en ce qu'il comprend des fils métalliques tendus transversalement pour supporter le support souple (2, 17).

## Claims

1. Method of making sheets of plastics material (10) of good optical quality, by depositing at least one liquid mass (9) on a movable planar support to form at least one layer and by heating to effect solidification of the layer or layers formed, characterised in that the liquid mass forming the plastics material is deposited on a flexible ribbon (2, 17) which is stretched longitudinally and transversely of which the surface is freed from creases and rendered perfectly smooth by heating (7, 25) immediately before deposition of the liquid mass, this support itself passing over a fixed table (11, 23) placed at least at the location where the liquid mass is deposited.

2. Method according to claim 1, characterised in that the liquid mass (9) forming the plastics material is deposited on a stretched flexible ribbon (2, 17) of small thickness of a material selected from polyethyleneglycol terephthalate and regenerated cellulose.

3. Method according to one of claims 1 and 2, characterised in that the liquid mass (9) is deposited when the flexible support (2, 17) has been subjected to a slight lengthening.

4. Method according to one of claims 1 to 3, characterised in that the liquid mass (9) forming the plastics material is deposited on a stretched flexible support (2, 17) previously coated with a separating agent.

5. Method according to claim 4, characterised in that when the plastics material has solidified it is separated with the separating agent from the casting support (2, 17).

6. Method according to one of claims 1 to 3, characterised in that the stretched flexible support (2, 17) is incorporated in the sheet of plastics material (10).

7. Method according to one of claims 1 to 6, characterised in that a plurality of successive liquid masses are deposited on the stretched flexible ribbon (2, 17).

8. Method according to claim 7, characterised in that the sheet of plastics material (10) has energy absorbing properties.

9. Method according to claim 7, characterised in that the materials forming the successive layers are different from one layer to another.

10. Method according to one of claims 7 to 9, characterised in that at least one deposited liquid mass (9) forms a layer of polyurethane.

11. Method according to claim 10, characterised in that the polyurethane layer is an anti-lacerating and self-healing layer of thermosetting polyurethane.

12. Method according to one of claims 10 and 11, characterised in that a deposited liquid mass (9) forms a polyurethane layer having properties of adhesion.

13. Method according to claim 12, characterised in that the polyurethane layer having properties of adhesion is a blocked polyurethane.

14. Method according to one of claims 6 to 13, characterised in that the stretched flexible support (2, 17) has an adhesive surface.

15. Device for making sheets of plastics material of good optical quality, comprising means (8, 17, 28) for depositing at least one liquid mass (9), a movable planar support on to which this liquid mass is fed, heating means (12, 29, 30) for solidifying the layer or layers formed, characterised in that the support is a flexible support (2, 17) which is stretched longitudinally and transversely by traction means (4, 5, 20, 21, 6, 22), uncreased and rendered smooth by heating immediately before deposition of the liquid mass while it is supported horizontally over its useful width at least at the location where the liquid mass is deposited.

16. Device according to claim 15, characterised in that the stretched flexible support (2, 17) is selected from polyethyleneglycol terephthalate and regenerated cellulose.

17. Device according to one of claims 15 and 16, characterised in that the flexible support (2, 17) has a thickness from 0.01 to 0.08 millimetres.

18. Device according to claim 15, characterised in that it comprises ; a distributor (1, 16) for a flexible support (2, 17) of small thickness, means for stretching this support longitudinally (4, 5, 20, 21) and transversely (6, 22) and render it as planar as possible, means (7, 26) for heating this support before depositing the mass (9) to be cast, means (8, 17, 28) for depositing the mass to be cast, and means (11, 23) supporting the support horizontally over its useful width at least at the location where the liquid mass is deposited.

19. Device according to one of claims 15 to 18, characterised in that the means for stretching the flexible support comprise at least one traction roller (5, 21) associated with at least one counter-roller (4, 20) and members (6, 22) exerting lateral forces outwardly.

20. Device according to claim 19, characterised in that the traction roller (5, 21) is associated with pairs of rollers (6, 22) arranged along the edges of the support (2, 17) and oriented outwardly with respect to the direction of advance of the ribbon.

21. Device according to claim 20, characterised in that the rollers (6, 22) arranged along the edges of the support (2, 17) are adjustable.

22. Device according to claim 21, characterised in that the edge rollers (6, 22) are provided with a system allowing their orientation relative to the direction of advance of the support (2, 17) to be modified.

23. Device according to one of claims 20 and 21, characterised in that the side rollers comprise at least one spring (57) allowing adjustment of their gripping action on the support (2, 17).

24. Device according to one of claims 15 to 23, characterised in that it comprises at least one furnace for drying or solidification (19, 29, 30) comprising a series of boxes each comprising glass plates (23) and electric resistances (26).

25. Device according to one of claims 15 to 24, characterised in that the zone for casting and solidification is situated in an enclosure containing filtered air.

26. Device according to one of claims 15 to 25, characterised in that it comprises cleaning means.

27. Device according to one of claims 15 to 26, characterised in that it comprises metal wires stretched transversely to support the flexible support (2, 17).

## Ansprüche

1. Verfahren zur Herstellung von Platten oder Folien aus Kunststoff (10) mit guter optischer Qualität, mit welchem eine fließfähige Masse (9) auf eine ebene bewegliche Unterlage zur Bildung von mindestens einer Auflage oder Schicht aufgebracht wird und die gebildete Auflage oder die gebildeten Auflagen unter Erhitzung verfestigt werden, dadurch gekennzeichnet, daß die fließfähige Masse, die den Kunststoff stellt, auf ein biegsames, längs und quer gestrafftes Band (2, 17) aufgebracht wird, dessen Oberfläche geglättet und völlig eben gemacht worden ist durch eine vorherige Erwärmung (7, 25) unmittelbar vor Aufbringen der fließfähigen Masse, wobei die Unterlage selbst über einen festen Tisch (11, 23) läuft, der mindestens an der Stelle angeordnet ist, wo die fließfähige Masse aufgebracht wird.

2. Verfahren nach Anspruch 1, dadurch gekennzeichnet, daß die fließfähige Masse (9), die den Kunststoff stellt, auf ein biegsames gestrafftes Band (2, 17) mit geringer Dicke und aus einem Material aufgebracht wird, welches gewählt ist aus dem Terephtalat von Polyäthylenglykol und regenerierter Zellulose.

3. Verfahren nach einem der Ansprüche 1 oder 2, dadurch gekennzeichnet, daß die fließfähige Masse (9) aufgebracht wird wenn die biegsame Unterlage (2, 17) einer leichten Dehnung unterworfen wird.

4. Verfahren nach einem der Ansprüche 1 bis 3, dadurch gekennzeichnet, daß die fließfähige Masse (9), welche den Kunststoff stellt, auf eine biegsame, gestraffte Unterlage (2, 17) aufgebracht wird, die zuvor mit einem Trennmittel überzogen worden ist.

5. Verfahren nach Anspruch 4, dadurch gekennzeichnet, daß einmal der verfestigte Kunststoff mit dem Trennmittel von der Unterlage (2, 17) getrennt wird.

6. Verfahren nach einem der Ansprüche 1 bis 3, dadurch gekennzeichnet, daß die biegsame, gestraffte Unterlage (2, 17) in den Aufbau der Platte aus Kunststoff (10) mit eingeht.

7. Verfahren nach einem der Ansprüche 1 bis 6, dadurch gekennzeichnet, daß man aufeinanderfolgend mehrere fließfähige Massen auf das biegsame, gestraffte Band (2, 17) aufgibt.

8. Verfahren nach Anspruch 7, dadurch gekennzeichnet, daß die Platte aus Kunststoff (10) energieabsorbierende Eigenschaften besitzt.

9. Verfahren nach Anspruch 7, dadurch gekennzeichnet, daß das die aufeinanderfolgenden Auflagen bildende Material von einer Auflage zur anderen unterschiedlich ist.

10. Verfahren nach einem der Ansprüche 7 bis 9, dadurch gekennzeichnet, daß mindestens eine der aufgebrachten fließfähigen Massen (9) eine Lage aus Polyurethan bildet.

11. Verfahren nach Anspruch 10, dadurch gekennzeichnet, daß die Auflage aus Polyurethan aus einem wärmehärtbaren, reißfesten und selbstschließenden Polyurethan gebildet ist.

12. Verfahren nach Anspruch 10 oder 11, dadurch gekennzeichnet, daß die aufgebrachte fließfähige Masse (9) eine Auflage aus Polyurethan mit Klebeigenschaften bildet.

13. Verfahren nach Anspruch 12, dadurch gekennzeichnet, daß die Auflage aus Polyurethan mit Klebeigenschaften ein geschlossenes Polyurethan ist.

14. Verfahren nach einem der Ansprüche 6 bis 13, dadurch gekennzeichnet, da, die biegsame, gestraffte Unterlage (2, 17) eine Klebefläche aufweist.

15. Vorrichtung zur Herstellung von Platten oder Folien aus Kunststoff mit guter optische Qualität, mit einer Einrichtung (8, 17, 18) zum Aufbringen von mindestens einer fließfähigen Masse (9), einer ebenen beweglichen Unterlage, auf welche die fließfähige Masse aufgegossen wird, Heizeinrichtungen (12, 29, 30), welche die Verfestigung der gebildeten Auflage oder der Auflagen bewirken, dadurch gekennzeichnet, daß die Unterlage biegsam ausgebildet, in Längsrichtung und quer durch Zug aufbringende Einrichtungen (4, 5, 20, 21, 6, 22) gestrafft ist, geglättet und eben gemacht ist durch vorherige Erwärmung unmittelbar vor dem Aufbringen der fließfähigen Masse, wobei das Band zur selben Zeit über seine nutzbare Breite mindestens an der Stelle horizontal abgestützt ist, wo die fließfähige Masse aufgebracht wird.

16. Vorrichtung nach Anspruch 15, dadurch gekennzeichnet, daß die biegsame, gestraffte Unterlage (2, 17) aus dem Terephtalat von Polyäthylenglykol und regenerierter Zellulose gebildet ist.

17. Vorrichtung nach Anspruch 15 oder 16, dadurch gekennzeichnet, daß die biegsame Unterlage (2, 17) eine Dicke zwischen 0,01 und 0,08 mm aufweist.

18. Vorrichtung nach Anspruch 15, gekennzeichnet durch eine Zuführeinrichtung (1, 16) für eine biegsame, eine geringe Dicke aufweisende Unterlage (2, 17), Einrichtungen zum Aufbringen eines Zugs in Längsrichtung (4, 5, 20, 21) und quer (6, 22) auf die Unterlage um diese so eben als möglich zu machen, eine Einrichtung (7, 26) zum vorherigen Aufheizen der Unterlage vor dem Aufbringen der Masse (9), Einrichtungen (8, 17, 28) zum Aufbringen der Masse, Einrichtungen (11, 23) zum horizontalen Abstützen des Bands auf seiner nutzbaren Breite mindestens an dem Ort, wo die fließfähige Masse aufgebracht wird.

19. Vorrichtung nach einem der Ansprüche 15 bis 18, dadurch gekennzeichnet, daß die Zug aufbringenden Einrichtungen mindestens eine Zugwalze (5, 21) aufweisen, die mindestens einer einen Widerstand erzeugenden Walze (4, 20) zugeordnet ist, und Mittel (6, 22) aufweisen, welche nach außen gerichtete seitliche Kräfte ausüben.

20. Vorrichtung nach Anspruch 19, dadurch gekennzeichnet, daß die Zugwalze (5, 21) Rollenpaaren (6, 22) zugeordnet ist, die über die Länge der Ränder der Unterlage (2, 17) angeordnet und bezüglich der Vorschubrichtung der Unterlage nach außen gerichtet sind.

21. Vorrichtung nach Anspruch 20, dadurch gekennzeichnet, daß die über die Länge der Ränder der Unterlage (2, 17) angeordneten Rollen (6, 22) einstellbar sind.

22. Vorrichtung nach Anspruch 21, dadurch gekennzeichnet, daß die Rollen (6, 22) mit einem System ausgerüstet sind, welches die Änderung ihrer Ausrichtung bezüglich der Vorschubrichtung der Unterlage (2, 17) ermöglicht.

23. Vorrichtung nach Anspruch 20 oder 21, dadurch gekennzeichnet, daß die Rollen mindestens eine Feder (57) zur Regelung des Klemmdruckes auf die Unterlage (2, 17) aufweisen.

24. Vorrichtung nach einem der Ansprüche 15 bis 23, dadurch gekennzeichnet, daß die Vorrichtung mindestens einen Trocknungs- oder Verfestigungsofen (12, 29, 30) aufweist, der durch eine Reihe von Gehäusen gebildet ist, die jeweils Glasplatten (23) und elektrische Widerstandsheizeinrichtungen (26) aufweisen.

25. Vorrichtung nach einem der Ansprüche 15 bis 24, dadurch gekennzeichnet, daß die Gieß- und Vergestigungszone in einem Gehäuse angeordnet ist, welches einen Luftfilter aufweist.

26. Vorrichtung nach einem der Ansprüche 15 bis 25, dadurch gekennzeichnet, daß die Vorrichtung Reinigungseinrichtungen aufweist.

27. Vorrichtung nach einem der Ansprüche 15 bis 26, dadurch gekennzeichnet, daß die Vorrichtung quer verlaufende, gestraffte Metallfäden zum Abstützen der biegsamen Unterlage (2, 17) aufweist.

## FIG_1

0 038 760

## FIG_2

## FIG_3

0 038 760

# FIG_4

# FIG_5